# EUROPEAN PATENT SPECIFICATION

(11) **EP 0 852 839 B1**
(45) Date of publication and mention of the grant of the patent: **08.03.2000**
(21) Application number: 96932302.1
(22) Date of filing: 23.09.1996
(51) Int. Cl.: H02G 3/18

(54) **PLASTIC JUNCTION BOX WITH RECEPTACLE BOXES**
KUNSTSTOFFABZWEIGDOSE MIT STECKDOSEN
BOITE DE TIRAGE EN PLASTIQUE AVEC BOITES A PRISES DE COURANT

(30) Priority: 29.09.1995 US 5178 P; 19.09.1996 US 715787
(43) Date of publication of application: 15.07.1998
(73) Proprietor: Guilford (Delaware), Inc., Guilford, ME 04443 (US)
(72) Inventor: SCHILHAM, Jan, L., NL-3831 AK Leusden (NL)
(74) Representative: Bassett, Richard Simon
(86) International application number: US9615166
(87) International publication number: WO9712433

(56) References cited:
- FR-A- 2 623 029
- US-A- 5 052 157
- US-A- 5 057 647
- US-A- 5 362 922

## Description

### BACKGROUND OF THE INVENTION

This invention relates generally to an insulated junction box that organizes and provides access to electrical, data or telecommunications cables or other service lines that are routed through channels formed between a false floor that is supported above an existing floor.

Various flooring systems have been developed that are designed to provide spaces or channels between an existing floor and a false floor supported above the existing floor. The resulting channels are then used to carry various cables, wires, hoses, compressed air lines, power lines, phone lines or water pipes across the floor or to any point within the room. Most such false flooring systems were developed in response to the need for better organization and delivery of power, data and telecommunications cables needed for the plethora of different electronic equipment (e.g., computers, facsimile machines, telephones, modems, etc.) used in modern offices. By providing a false flooring system with multiple channels through which cables can travel, equipment within a room can be readily replaced or moved or new equipment added by accessing the channels within the false floor and removing, reorganizing or adding the appropriate cables.

Such false floors or raised panel floors typically utilize removable panels laid side-by-side upon raised support members in order to afford a free space where conduit, cables, hoses, wires and other computer interconnections can be routed. Many false flooring systems use adjustable jacks at each panel corner as a means of support. The support jacks for such systems are located only at the corners of the panels, which are usually square with sides of 500 to 600 mm. Accordingly, rigidity and mechanical stability of the floor must be achieved through the use of very thick panels, usually 30 to 40 mm thick, sometimes including a framework which transfers the load to the jacks. Due to the loss of usable height, these types of false flooring require an overall height of 150 to 200 mm, which is incompatible with low ceilings in existing buildings and requires new facilities to be built with added height. As an example, if one considers a 200 mm false floor at each level of a thirty-story building, the additional required height becomes six meters, the equivalent of two stories. Installing such a false floor in existing buildings requires the construction of ramps and steps as well as fire and soundproofing barriers. Finally, such structures are sometimes noisy and act as resonators. In any event, installing existing false floors as part of a building renovation or in new construction, is both involved and costly.

U.S. Patent No. 5,052,157 to DuCroux, et al. (the "DuCroux patent"), incorporated herein in its entirety by this reference, describes a false flooring system that includes base plates with a fairly dense pattern of supports or stand-offs that support false floor plates while providing a network of channels through which cables, hoses and similar service delivery lines can be routed. This system solves many problems previously associated with false floors, including such problems as described above. In addition to forming the false flooring system taught by the DuCroux patent by heat forming or injection molding of a plastic compound such as polystyrene, polyethylene, polypropylene or ABS, an alternative, non-combustible material, such as metal, may be formed into the false floor system. Details and the resulting advantages of accomplishing such a construction are fully described in pending U.S. Patent No. 5,499,476 filed August 31, 1993 for "Low Profile Raised Flooring With Metal Support Structure," incorporated herein in its entirety by this reference.

However, while much effort has been expended in developing false flooring systems, generally little innovation has been directed to providing an interface between the cables traveling within the channels underlying a false floor and the equipment that must be connected to cables traveling within those channels. For instance, the false flooring systems disclosed and claimed in U.S. Patent Nos. 2,089,893 to Greulich, and 4,905,437 to Heather, each utilize a false floor panel supported by a plurality of projections between and through which cables can pass. A simple aperture, through which a cable can be pulled to connect either to an outlet fitted within the aperture or to a specific piece of equipment, is the only interface provided between the channels beneath and the equipment above the false floor. Such an approach may be appropriate when there are relatively few cables to deal with and skilled personnel are available to wire each electrical, data, telecommunication or other cable to the appropriate outlet or machine; however, a major motivation for using false floor systems has been the great number of cables and interconnections necessary for the various machines residing in the modern office and often used by technically untrained persons.

Other attempts at providing an interface between the office equipment disposed at various points about a false floor and the cables underlying the false flooring system have resulted in complex, difficult to install and/or move structures. For instance, U.S. Patent No. 5,263,289 to Boyd discloses a box, which must be embedded into the structural floor, for providing service connection points. Additionally, U.S. Patent No. 4,968,855 to Le Paillier discloses a "distribution slab" for wiring buildings. One embodiment illustrates a slab in which the outlets face upwards, thus requiring that spacing within the channels created between the base and lids be increased where bulky connection devices or plugs will be utilized. Another embodiment places outlets within one or more lids that can be raised or lowered. When the lid is lowered the outlets are inaccessible; however, when it is raised, while accessible, outlets are exposed to the environment and the raised lid and outlet becomes a hazard to those traveling the false floor.

Much like the Le Paillier "distribution slab," U.S. Patent No. 5,057,647 to Bogden, et al., discloses a "distribution block" that inserts into one of four compatibly shaped knockouts disposed in each corner of a floor plate. Once the appropriate knockout is removed, the distribution block inserts into the knockout and connects with modular electrical "whips" composed of electrical wires and end connectors. Electrical socket outlets and a cover plate are then fixed into the distribution block so that the outlets are exposed. Because the knockouts are formed in flooring plates through perforations, once the perforations are ruptured and the knockout plate removed, there is no means for replacing the knockout. Accordingly, in order to change the position of an already installed distribution block, not only must the block be laboriously unfastened, but the entire floor panel would need to be removed and replaced.

U.S. Patent No. 5,362,922 to Whitehead discloses an electrical floor box in the general shape of a Greek cross, having a substantially square central portion, the arms of the cross defining cells extending outwardly from each side of the central portion. A plastic divider fits in the central portion and rests on the bottom of the box. A device cover plate extends down to fit into grooves on the divider and forms a cell above and to the side of the divider. A top plate covers the open top of each cell while leaving the central area open. However, Whitehead does not show tracks formed on the inside of a receptacle box or a frame comprising a central aperture that is capable of accepting a cable connector means for insertion into the tracks. Whitehead's electrical floor box is not described for use with a false floor; nor does Whitehead disclose means for contacting a selected group of standoffs to solve the technical problem of positioning the junction box laterally within a false floor without the need for additional fixing means.

As is described in the prior patent applications identified above, metal junction boxes present numerous benefits. Because such junction boxes conduct electricity, however, in certain applications short circuits can result from contact between wires or cables within or near such boxes and the boxes. Additionally, metal junction boxes can be difficult to make water-resistant or waterproof, and can be expensive to manufacture and install.

It is desirable that a junction box pass Standard IP 2.4.7 so that the associated certificate of approval can be obtained. This International Protection standard involves part 2, involving protection against a water "shower" of ten minutes applied to an installed and closed junction box, part 4, involving a safety standard for accessibility, and part 7, which is a standard for strength.

### SUMMARY OF THE INVENTION

The junction box of the present invention may include a centrally located housing having a bottom and four sides joined to form a square. One or two receptacle boxes also having bottoms are attached to each side of the square to provide housings for outlets and the cable and wire connections to such outlets. The outlets are accessible to the centrally located housing so that plugs may be positioned within the housing and received in the outlets. A cover lies above the outlet boxes and provides access to the outlets within the housing through a central hatch or opening in the cover. A junction box manufactured in accordance with the present invention is capable of obtaining certification under IP 2.4.7.

The housing and cover may be formed from a variety of plastic materials, particularly including molded polypropylene, but also including polystyrene, polyethylene, ABS or PVC.

The junction box acts as an interface between (1) the electrical, telecommunication, data or other service lines traveling through channels formed beneath a false floor and (2) the equipment resting upon the false floor that must connect to the correct service line. Various outlets within the junction box may be provided for electrical, telecommunication or data transmission lines of the flush or forward type or may be pierced with holes for passage of lines through the junction box directly to a specific piece of equipment.

Installation of the cable junction box is accomplished without the necessity for fastening means, such as screws, adhesive or clamps, as the housing of the junction box is shaped to fit tightly between and around the posts or stand-offs which support the false floor plates above the structural floor. The central housing and outlet boxes preferably are fabricated as a single unit but also can be assembled from several components into various shapes, but preferably a square or cruciform, all of which fit tightly between and around the stand-offs supporting a false floor. No special fasteners or other attachment means need be used, as frictional contact between cutouts in a flange or ledge running along the top of the housing and stand-offs will fix the housing in place. Utilizing a housing of this construction, a junction box can be placed at virtually any point in the area covered by a false floor. Accordingly, not only is flexibility of position greatly enhanced, but the junction box readily can be concealed in less traveled areas (e.g., underneath equipment or furniture), yet be conveniently close to equipment so that ready access to outlets within the junction box is provided.

Typically, electrical or other components to which cables connect are often of different sizes, depending either on the type of component or the component supplier. Rather than customizing each housing to accept each type of component, the sides of the housing may include a plurality of standard notches, channels or slots. Frames, formed of plastic or some other, preferably dielectric, material may then be used with particular components or with particular suppliers' components. Each frame may simply slide into and be captured between a pair of opposed notches and thus held in place forming one wall of a receptacle box. The correctly sized cutout for a particular receptacle can be formed in each frame. A variety of frames with different sized component openings can be provided as an installation package to the installer, who will select the proper frame, snap the desired component into place in the frame and slide the frame into the proper notch or hole in the housing. Thus, it is possible with inexpensive, slide-in frames to outfit the junction box with virtually any component demanded by a particular client

An additional feature of the present invention is a hatch cover shaped to cover the access aperture within the cover, thereby ensuring foreign objects do not enter the junction box, possibly to damage the outlets or cables within, while preventing the junction box from becoming a hazard to persons or objects traveling upon the false floor. Moreover, the hatch cover can be covered with the same carpet or other covering that is used on the flooring plates, thus concealing better the junction box from passers by. A small cable protector in the hatch cover allows it to be fully closed while still providing an egress for one or more cables entering the junction box and connecting to the outlets.

Although designed for use with any of the flooring systems disclosed in U.S. Patent No. 5,052,157, Reissue Application Serial No. 08/110,656, Patent Application Serial No. 08/114,447, and Patent Application Serial No. 08/294,441, the present invention can also be adapted for use with other false flooring systems that make use of a plurality of stand-offs to support various floor panels (e.g., U.S. Patent No. 4,905,437 to Heather) or even upon other appropriate surfaces such as walls. Thus, junction boxes according to this invention may be fabricated to match the heights and shapes of the posts which support the false floor in which the junction box is used or to fit between the studs in a wall. Additionally, junction boxes can be fabricated to the length and shape required to engage with the desired number of posts to obtain thereby the desired size of junction box. More or fewer outlets can be provided within a junction box depending on the number of cables needed to be organized and accessed.

It is therefore an object of the present invention to provide an economical, simple-to-use plastic junction box that interfaces with cables traveling under a false floor and equipment placed at various points about the false floor.

It is another object of the present invention to provide an easily installed junction box that can be placed at virtually any point on a false floor without the need for extensive connection methods or attachment systems.

It is yet another object of the present invention to provide a floor plate with an aperture through which the junction box is accessible regardless of its location in the false floor.

It is a further object of the present invention to provide a hatch cover to cover and protect the junction box and outlets within it from entry of foreign objects while decreasing the hazard that an otherwise open aperture would offer.

It is yet a further object of the present invention to provide a variety of frames that can be used to hold different sized components connecting to the cables and that can easily slide into any one of a plurality of standard sized holes formed in the housing sides.

It is yet an additional object of the present invention to provide a flange through which stand-offs can project in order that the flange encircles the stand-offs completely to provide increased stability to the junction box.

It is yet another object of the present invention to provide a protective guard that prevents contact with the components connecting to the cables by forming a channel into which project portions of the components and through which cables can be routed.

These objects are achieved by a junction box in accordance with the appended claim 1. Advantageous features are defined in the dependent claims.

Other objects and advantages of the present invention will become apparent with reference to the remainder of the text and the drawings of this application.

### BRIEF DESCRIPTION OF THE DRAWINGS

FIG. 1 is a perspective view of the top and one side of the junction box of the present invention.

FIG. 2 is a perspective view of the junction box shown in FIG. 1 shown in position on a system of low profile raised flooring stand-off supports.

FIG. 3 is a perspective view similar to FIG. 2 with the junction box cover removed.

FIG. 4 is a top plan view of the housing of the junction box of the present invention.

FIG. 5 is a cross-sectional view taken along lines 5-5 in FIG. 4.

FIG. 6 is a fragmentary bottom plan view of one-half of the housing shown in FIG. 4.

FIG. 7 is a top plan view of the junction box cover of the present invention.

FIG. 8 is a cross-sectional view of the junction box cover taken along lines 8-8 in FIG. 7.

FIG. 9 is a fragmentary bottom plan view of one-half of the junction box cover shown in FIG. 7.

FIG. 10 is a top plan view of an embodiment of a junction box hatch cover in accordance with the present invention that provides a carpet support surface substantially coplanar with carpet support surfaces adjacent to the hatch cover. The hatch cover is shown in place on the junction box of the present invention.

FIG. 11 is a cross-sectional view taken along lines 11-11 in Fig. 10, which shows the junction box and hatch cover, and illustrating a cable access apparatus in its closed and open (in phantom lines) positions.

FIG. 12 is a fragmentary top plan view similar to FIG. 10 showing an alternative embodiment of a hatch cover having a different cable access apparatus.

FIG. 13 is a cross-sectional view taken along lines 13-13 in FIG. 12.

FIG. 14 is a top plan view of an embodiment of a junction box hatch cover that has a wide lip to make apparent the location of the junction box positioned under the hatch cover. The hatch cover is shown in place on the junction box of the present invention.

FIG. 15 is a cross-sectional view of the junction box and hatch cover taken along lines 15-15 in FIG. 14 illustrating the cable access apparatus closed and (in phantom lines) in an open position.

FIG. 16 is a fragmentary top plan view showing an alternative embodiment of the hatch cover shown in FIG. 14 with a different cable access apparatus.

FIG. 17 is a cross-sectional view taken along lines 17-17 in FIG. 16, showing the cable access apparatus closed and (in phantom lines) in open positions.

FIG. 18 is a top plan view of an embodiment of the junction box hatch cover of the present invention with an upstanding lip surrounding the junction box access hatch. The hatch cover is shown in place on the junction box of the present invention.

FIG. 19 is a cross-sectional view taken along lines 19-19 in FIG. 18.

FIG. 20 is a front elevation view of a typical receptacle frame for use in connection with the junction box of the present invention.

FIG. 21 is a side elevation view of the frame shown in FIG. 20.

FIG. 22 is a front elevation view of a second typical receptacle frame for use in the junction box of the present invention.

FIG. 23 is a side elevation view of the frame shown in FIG. 22.

### DETAILED DESCRIPTION OF THE DRAWINGS

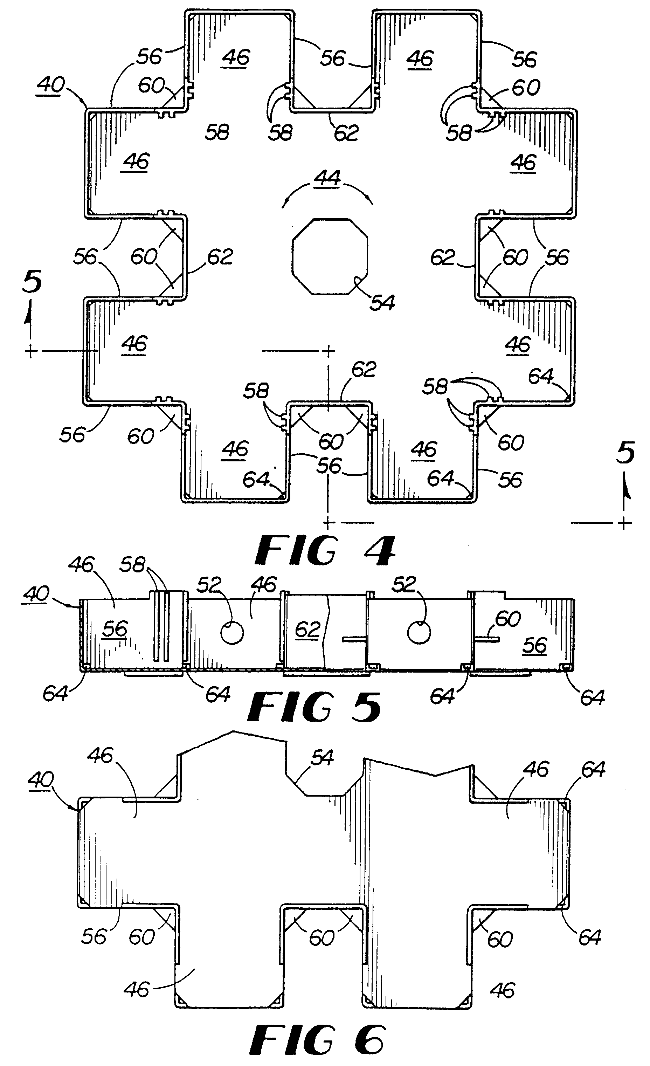

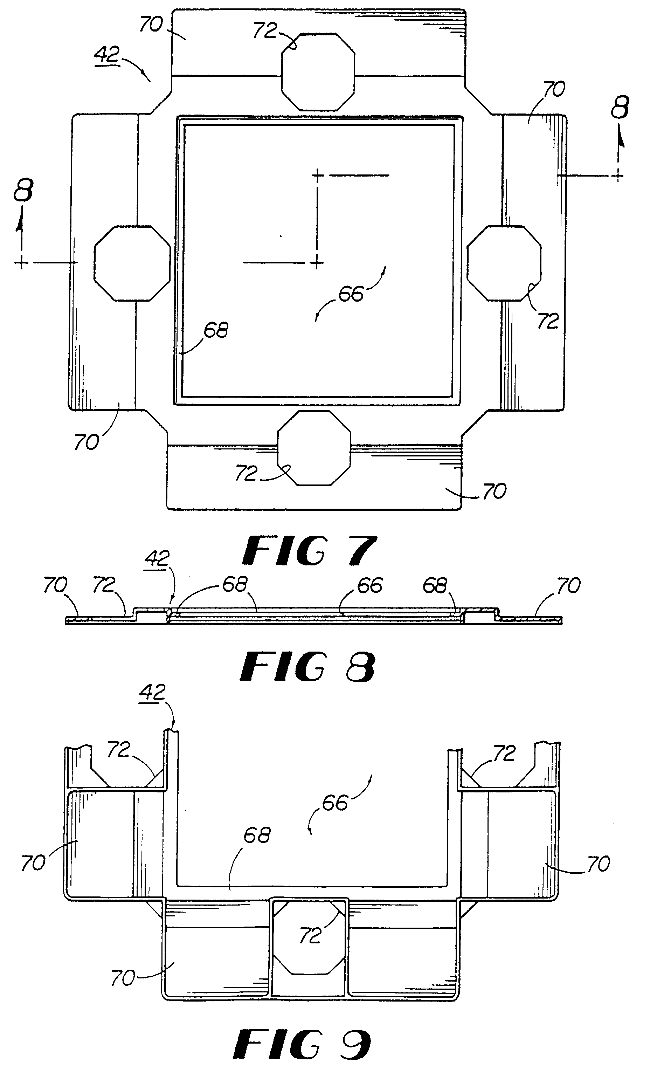

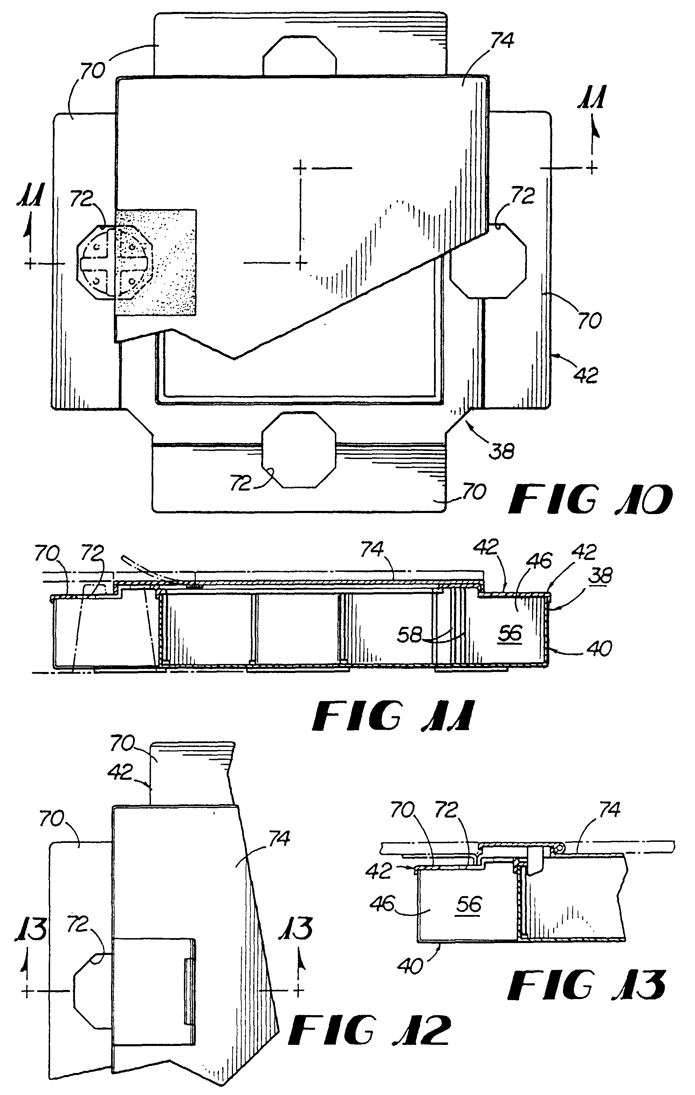

As may be readily understood by reference to the figures, the junction box **38** of the present invention generally comprises a housing **40** shown in top plan view in FIG. 4 and a cover **42** shown in Figures 7, 8, and 9.

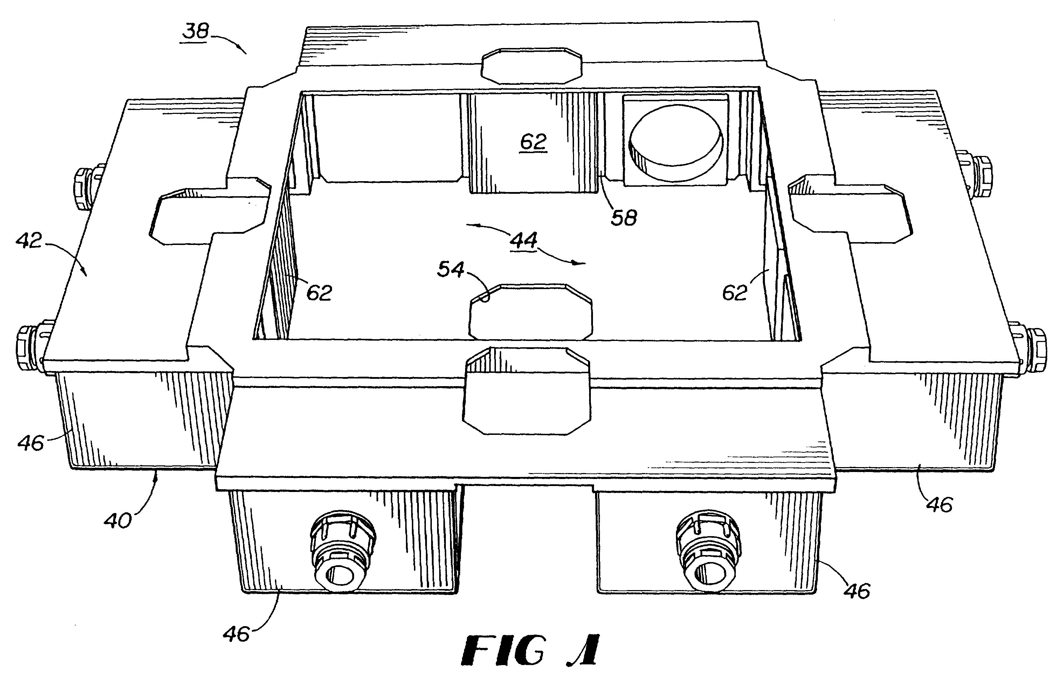

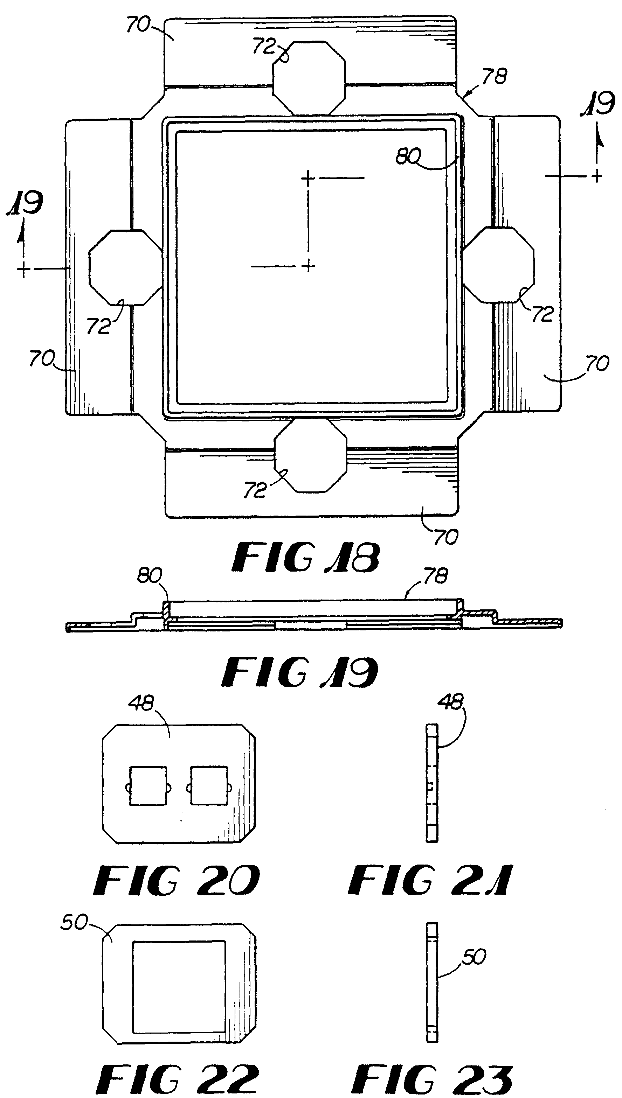

Housing **40** has a central area **44** and eight receptacle boxes **46**. Receptacle boxes **46** are separated from the central area **44** by slide-in frames such as frame **48** in FIGS. 20 and 21 or frame **50** in FIGS. 22 and 23. Frames are visible in FIGS. 1 through 3. The frames, such as frames **48** and **50**, are received in tracks **58** on the insides of box walls **56**. Cables enter boxes **46** through cable holes **52** visible in FIG. 5, and cables may be protected by cable feed-throughs shown positioned in cable holes **52** in FIGS. 1 through 3.

Electrical or other components or cable connection means, such as outlets, may be easily attached to the central opening of the frames **48** and **50**. Such attachment can occur by, for instance, providing the outlet with flexible prongs that bend when the outlet is inserted into the opening in order to allow insertion, then flex back to their original position to hold the outlet within the opening. As shown in Figures 20 through 23, numerous frames **48** and **50** with different sized openings may be formed of an inexpensive plastics type material and provided to installers of the housing **40**. Frames **48** and **50** with the different sized openings allow easy installation of virtually any type of component, whether electrical outlet, data communication outlet or telephone jack, regardless of whether the same components are produced by different manufacturers. Frames **48** and **50** save significantly on installation time, and thus labor cost, since the installer need only snap the chosen outlet into the correct frame, slide each such assembled frame into the notch in the housing, and then place the housing among the pedestals, as shown in FIG. 1.

Frames may also be used with the housings **40** by providing snap-locking tabs on the outer edges of the frames. The tabs would hold the frames within the openings of the housings **40**. Alternatively, the housings **40** could be modified to accept the frames by simply snipping away the portion of the housing **40** located beneath the opening to form a notch that readily accepts a frame. If the frames are formed of a good dielectric material, any electrical components will be isolated from the junction box housing. Such isolation eliminates the need for grounding the housing and allows compliance with various standards, such as European installation standards IP 2,4 and 7.

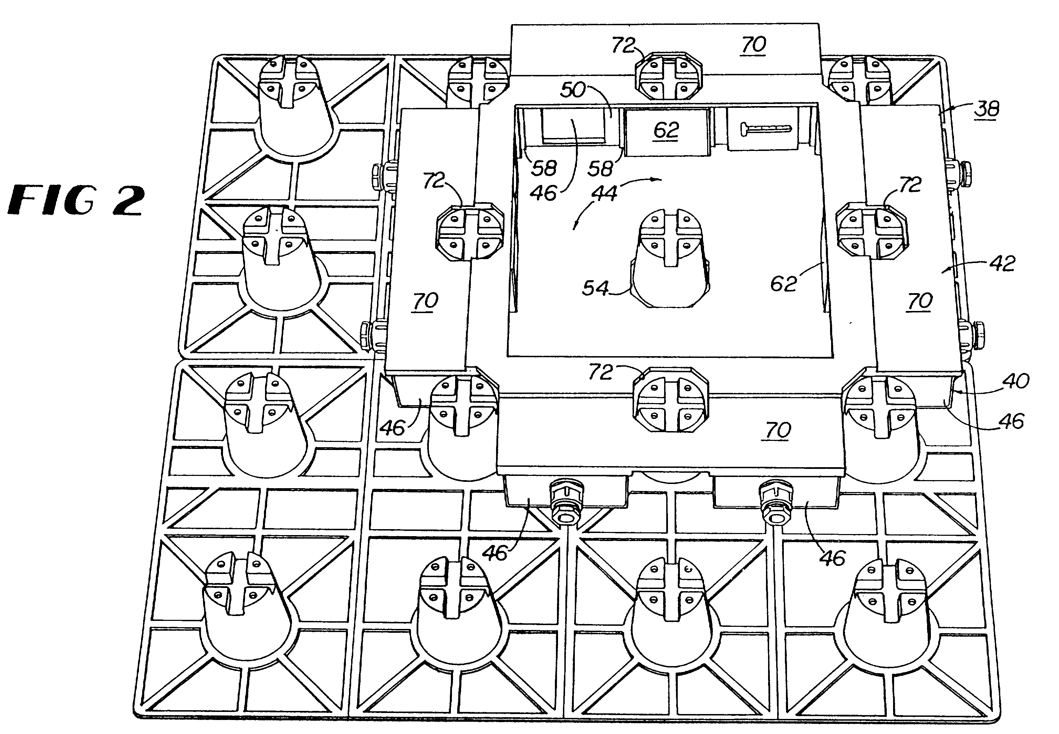

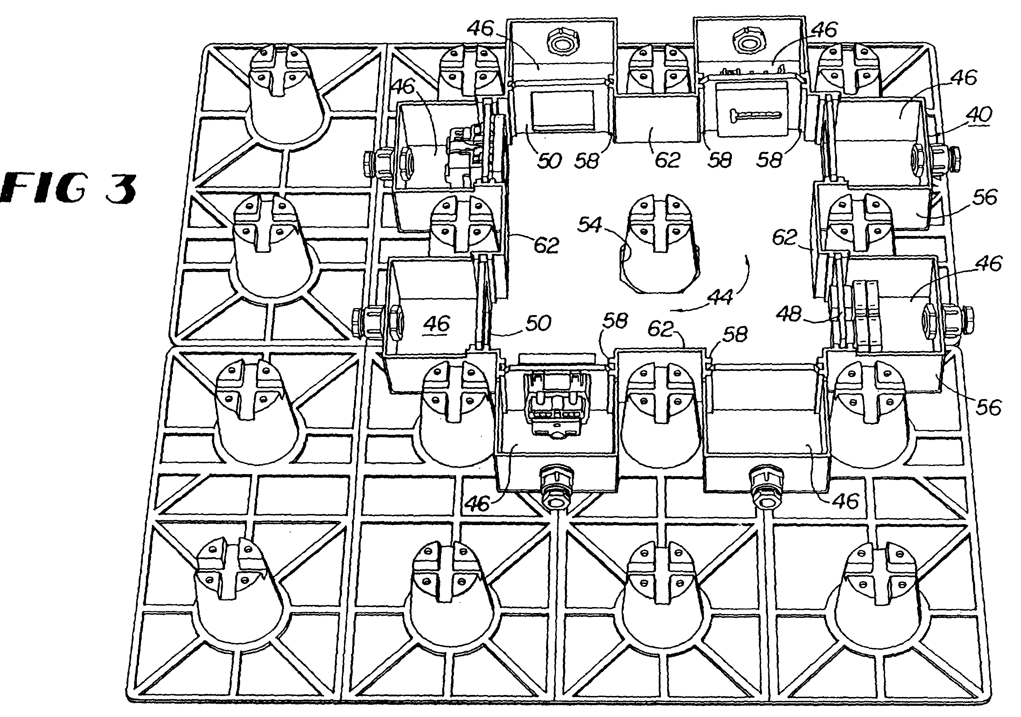

As will be appreciated by reference to FIGS. 2 and 3, the junction box **38** comprising housing **40** and cover **42** is positioned on low profile raised flooring standoffs so that a standoff protrudes through standoff opening **54** (visible in FIGS. 2 and 3) and a standoff is positioned adjacent to each side **56** of each box **46**.

Gussets **60** between adjacent box walls **56** and between box walls **56** and housing walls **62** reinforce and strengthen housing **40**. Optional openings **64** at the bottom corners of boxes **46** provide drainage for any moisture that may accumulate in the boxes **46**. Alternatively, such openings **64** may be omitted if it is desired that the box 38 be sealed against water entry from below as might occur if a substantial quantity of standing water accumulates on the floor.

FIGS. 7, 8, and 9 illustrate the junction box cover **42** of the present invention. Cover **42** generally has a cruciform shape with a central hatch opening **66** defined by a hatch frame **68** and four box covering plates **70**, each of which covers two boxes **46** and each of which has a laterally centered opening **72** that receives the top of a low profile raised flooring standoff.

Alternative hatch covers and cable access and cover devices are illustrated in FIGS. 10 through 17.

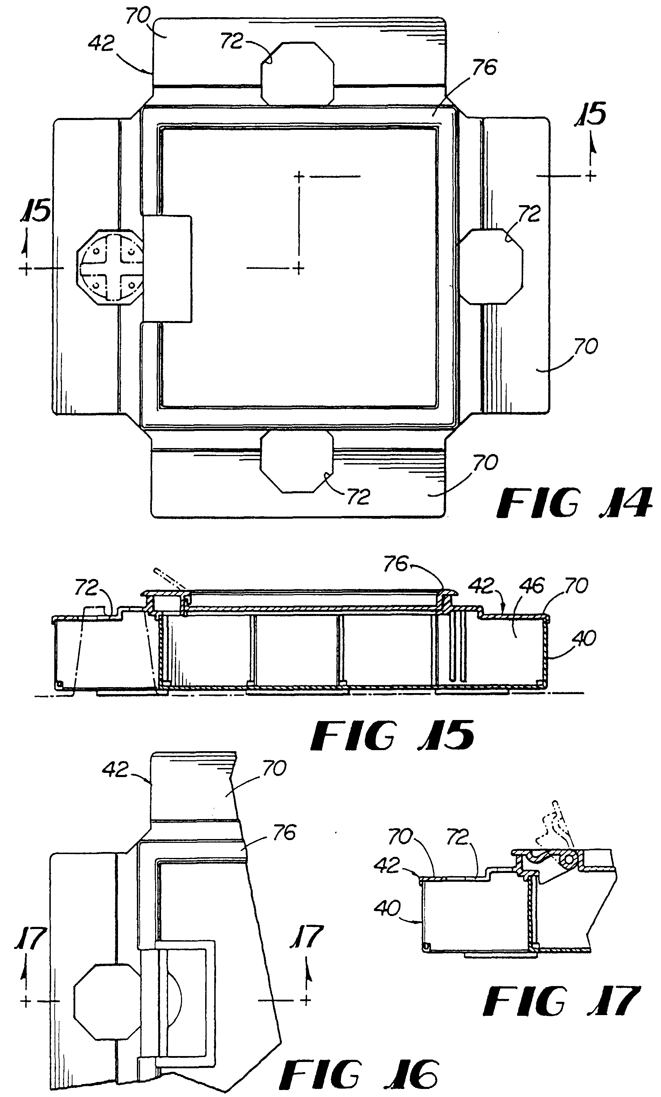

The hatch cover **74** illustrated in FIGS. 10-13 presents a carpet support surface generally coplanar with surfaces adjacent to the junction box. It may be fabricated of steel or plastic. By contrast, the hatch cover **76** illustrated in FIGS. 14-17 is typically made of plastic and presents a prominent frame to make apparent the location of the junction box.

FIGS. 18-19 illustrate an alternative junction box cover 78 that has a relatively tall upstanding lip **80**.

As noted above, the principal components of the junction boxes and hatch covers of the present invention are desirably manufactured from polypropylene, although a variety of other thermoplastic and thermoset resin systems and materials may be used in appropriate heat-forming injection molding or other fabrication techniques. Such resin systems may be used with a wide variety of appropriate fillers and reinforcement materials, particularly including fibers reinforcement materials such as fiberglass.

As will be appreciated by those skilled in the art, once the junction box **38** of the present invention is installed (including the cover 42) together with a hatch cover and other components of a floor system, any water showered onto the box from above (as in IP 2.4.7) is deflected around the box, and little if any such water enters the box.
The foregoing is provided for purposes of explanation and disclosure of preferred embodiments of the present invention. For instance, the shape of the junction box housing or receptacle boxes may be modified, yet still fall within the following claims. Further modifications and adaptations to the described embodiments will be apparent to those skilled in the art and may be made without departing from the scope of the invention, which is defined by the following claims.

## Claims

1. A junction box (38) for use with a false flooring system having standoffs for supporting floor panels comprising:
(a) a housing (40) defining a plurality of side walls (62) joined to form a closed perimeter and a bottom;
(b) at least one receptacle box (46) for enclosing outlets, wherein the receptacle box (46) is attached to at least one side wall; and
(c) tracks (58) formed on the inside of the receptacle box (46) and a frame (48 or 50),
comprising a central aperture capable of accepting a cable connector means, for insertion into the tracks (58) .

2. A junction box (38) according to claim 1 further comprising a second receptacle box (46) and means for contacting a selected group of the standoffs in order to position the junction box (38) within the false flooring system.

3. A junction box (38) according to claim 2 further comprising a cover (42) for completely enclosing outlets placed within the receptacle boxes (46).

4. A junction box (38) according to claim 3 in which the cover (42) forms openings (72) through which the standoffs protrude.

5. A junction box (38) according to claim 4 in which the housing (40) forms a generally square perimeter and at least one receptacle box (46) is located on each corner of the square.

6. A junction box (38) according to any of claims 1 or 2 in which the housing (40) further comprises a bottom and a cover (42), each of which is shaped to minimize fluid entry into the junction box (38).

7. A junction box (38) according to claim 6 further comprising a hatch formed in the cover (42) for allowing access to the interior of the housing (40).

8. A junction box (38) according to any of claims 1 through 5, wherein the side walls (62) enclose a central area (44) and the at least one frame (48 or 50) faces the central area (44) and is detachably connected to the receptacle boxes (46) for positioning and holding the outlet.

## Patentansprüche

1. Anschlussgehäuse (38) zur Verwendung mit einem Zwischenbodensystem, welches Abstandselemente zum Abstützen von Bodenplatten aufweist, umfassend:
(a) ein Gehäuse (40), welches eine Vielzahl von Seitenwänden (62) bestimmt, die verbunden sind, um einen geschlossenen Umfang und einen Boden zu bilden;
(b) wenigstens einen Aufnahmebehälter (46) zum Umschließen von Auslässen, wobei der Aufnahmebehälter (46) an wenigstens einer Seitenwand befestigt ist; und
(c) Führungen (58), die an der Innenseite des Aufnahmebehälters (46) ausgebildet sind, sowie einen zum Einführen in die Führungen (58) vorgesehenen Rahmen (48 oder 50), der eine zentrale Öffnung aufweist, die eine Kabelverbindungseinrichtung aufnehmen kann.

2. Anschlussgehäuse (38) nach Anspruch 1, welches ferner einen zweiten Aufnahmebehälter (46) und eine Einrichtung zum Kontaktieren einer ausgewählten Gruppe der Abstandselemente aufweist, um das Anschlussgehäuse (38) innerhalb des Zwischenbodensystems zu positionieren.

3. Anschlussgehäuse (38) nach Anspruch 2, welches ferner eine Abdeckung (42) zum vollständigen Umschließen der Auslässe aufweist, die innerhalb der Aufnahmebehälter (46) angeordnet sind.

4. Anschlussgehäuse (38) nach Anspruch 3, bei welchem die Abdeckung (42) Öffnungen (72) aufweist, durch welche hindurch die Abstandselemente vorstehen.

5. Anschlussgehäuse (38) nach Anspruch 4, bei welchem das Gehäuse (40) einen im wesentlichen rechteckigen Umfang bildet und wenigstens ein Aufnahmebehälter (46) an jeder Ecke des Rechtecks angeordnet ist.

6. Anschlussgehäuse (38) nach Anspruch 1 oder 2, bei welchem das Gehäuse (40) ferner einen Boden und eine Abdeckung (42) aufweist, die jeweils derart geformt sind, dass der Eintritt von Fluid in das Anschlussgehäuse (38) minimiert wird.

7. Anschlussgehäuse (38) nach Anspruch 6, welches ferner eine in der Abdeckung (42) ausgebildete Luke aufweist, welche einen Zugang in das Innere des Gehäuses (40) erlaubt.

8. Anschlussgehäuse (38) nach einem der Ansprüche 1 bis 5, wobei die Seitenwände (62) einen zentralen Bereich (44) umschließen und der wenigstens eine Rahmen (48 oder 50) dem zentralen Bereich (44) gegenüberliegt und mit den Aufnahmebehältern (46) lösbar verbunden ist, um den Auslass zu positionieren und zu halten.

## Revendications

1. Boîte de jonction (38) destinée à être utilisée avec un système de faux plancher comportant des supports destinés à supporter des panneaux de sol, comprenant :
a) un boîtier (40) formant logement définissant une pluralité de parois latérales (62) réunies pour former un périmètre fermé et un fond ;
b) au moins un boîtier récepteur (46) destiné à enfermer des orifices de sortie, le boîtier récepteur (46) étant fixé à au moins une paroi latérale ; et
c) des glissières de guidage (58) formées à l'intérieur du boîtier récepteur (46) et un cadre (48 ou 50) comprenant une ouverture apte à recevoir un moyen formant connecteur de câbles, destiné à être inséré dans les glissières de guidage (58).

2. Boîte de jonction (38) selon la revendication 1 comprenant, en outre, un second boîtier récepteur (46) et un moyen destiné à venir en contact avec un groupe choisi parmi les supports, afin de positionner la boîte de jonction (38) dans le système de faux plancher.

3. Boîte de jonction (38) selon la revendication 2 comprenant, en outre, un couvercle (42) pour enfermer complètement des orifices de sortie placés à l'intérieur des boîtiers récepteurs (46).

4. Boîte de jonction (38) selon la revendication 3, dans laquelle le couvercle (42) comporte des ouvertures (72) par lesquelles font saillie les supports.

5. Boîte de jonction (38) selon la revendication 4, dans laquelle le boîtier (40) formant logement constitue un périmètre généralement carré et dans lequel au moins un boîtier récepteur (46) est situé à chaque angle du carré.

6. Boîte de jonction (38) selon l'une quelconque des revendications 1 ou 2, dans laquelle le boîtier (40) formant logement comprend, en outre, un fond et un couvercle (42), dont chacun a une forme conçue pour réduire à un minimum l'entrée de fluides dans la boîte de jonction (38).

7. Boîte de jonction (38) selon la revendication 6 comprenant, en outre, une trappe formée dans le couvercle (42) en vue de permettre l'accès à l'intérieur du boîtier (40) formant logement.

8. Boîte de jonction (38) selon l'une quelconque des revendications 1 à 5, dans laquelle les parois latérales (62) enferment une zone centrale (44) et le cadre (48 ou 50) au minimum unique est situé en face de la zone centrale (44) et est relié de façon détachable aux boîtiers récepteurs (46) en vue de positionner et de maintenir l'orifice de sortie.
